# DEMANDE DE BREVET EUROPEEN

(11) **EP 2 085 421 A1**
(43) Date de publication de la demande: **05.08.2009**
(21) Numéro de dépôt: 08150689.1
(22) Date de dépôt: 25.01.2008
(51) Int. Cl.: C08J 9/00, C08L 23/02

(54) **Compositions de mousse ignifuge**

(71) Demandeur: NMC S.A., 4731 Raeren/Eynatten (BE)
(72) Inventeur: La désignation de l'inventeur n'a pas encore été déposée
(74) Mandataire: Office Freylinger

(57) **Abrégé**

Procédé de fabrication d'une mousse de polyoléfine ignifuge et mousse de polyoléfine ignifuge comprenant un mélange d'une polyoléfine choisie parmi le groupe comprenant le polyéthylène et le polypropylène, leurs copolymères et leurs mélanges, de 0,05 à 10 %, de préférence de 0,5 à 5 % en poids du mélange de nanotubes de carbone et de 0,05 à 15 %, de préférence de 0,5 à 10 % en poids du mélange de phosphore rouge.

## Description

### Domaine technique

La présente invention concerne des mousses de polyoléfines ignifuges ayant une résistance améliorée au feu, ainsi qu'un procédé de préparation de ces mousses et leur utilisation.

### Etat de la technique

L'utilisation d'agents retardateurs de feu ou agents ignifuges halogénés comme additifs est connue depuis longtemps, même en combinaison avec des agents synergistes, comme le trioxyde d'antimoine. Grâce à l'incorporation de ces agents halogénés, il est possible d'obtenir des performances ignifuges très intéressantes même à des concentrations relativement faibles en agent ignifuge de 2 à 15 % en poids. Ces teneurs réduites sont acceptables pour fabriquer les mousses basse densité à base de polyoléfines.

Néanmoins, vu les risques potentiels généralement associés à ces composés halogénés, les règlementations en cours d'élaboration font craindre une prochaine interdiction complète de ces composés halogénés. Le décabromodiphényléther est un exemple actuel de discussion sur son potentiel de formation de dioxines toxiques.

Il est également connu d'ajouter d'autres agents ignifuges, notamment en complément ou en remplacement de ces composés halogénés, à des polyoléfines afin d'augmenter leur résistance au feu. Les additifs classiquement utilisés sont p. ex. le trioxyde d'antimoine, le sulfate d'ammonium et le borax, ainsi que les hydroxydes métalliques.

Cependant, le fait de pouvoir utiliser des agents anti-feu dans les mousses de polyoléfines dépend très fortement de la quantité (concentration) qu'il faut utiliser pour obtenir une résistance au feu donnée (classement feu dans un test normé), qui elle-même est dépendante de la densité et de l'épaisseur de la mousse. Ainsi, on observe qu'il est impossible de charger une mousse de faible densité (< 60 kg/m³) avec une quantité importante de particules de type minéral infusible durant la transformation. Ceci tient au fait que ces particules ont une interaction avec l'agent de moussage, provoquant ainsi une profusion de cellules très fines. Cela peut d'une part réduire la capacité de moussage du mélange et/ou d'autre part entraîner la coalescence des cellules en des cavités et rendre la structure de la mousse hétérogène.

Comme exemples d'agents anti-feu minéraux infusibles, on peut citer les hydroxydes d'aluminium et de magnésium (relâchent de l'eau à plus haute température), le carbone graphite expansible, la mélamine, etc. La granulométrie de ces particules est également un facteur important, de très grosses particules créant de grosses cellules. Bien que non-halogénés, les teneurs nécessaires avec ces produits sont trop élevées, souvent de l'ordre de 25 à 60 % en poids de la composition non moussé.

D'une manière générale, l'incorporation d'additifs interfère donc avec le moussage. Chaque particule d'additif est un site potentiel pour la croissance d'une bulle de gaz, et on observe souvent une nucléation surabondante, ce qui nuit à la qualité de la mousse, surtout pour les mousses de très basses densités (de 10 à 25 kg/m³). De plus, chaque particule sertie dans les parois cellulaires, constitue un défaut potentiel de structure dommageable à l'intégrité de la paroi cellulaire et donc une source de rupture, provoquant alors des cellules ouvertes qui diminuent l'efficacité d'isolation de la mousse (transmission de la vapeur d'eau, de la chaleur).

Enfin, on connaît depuis 25 ans des particules de nature très différente, mais de granulométrie très réduite, appelées nanoparticules. Mais ce n'est que depuis dix ans que les études concernant l'utilisation de nanocomposites dans les systèmes retardateurs de flamme ont connu un essor considérable. Les nanocomposites suscitent un intérêt particulier pour deux raisons essentielles, d'une part ils peuvent générer des effets spécifiques (physiques ou chimiques) non observés dans les autres classes de systèmes anti-feu, d'autre part ils sont efficaces à des faibles taux d'incorporation (typiquement moins de 5% en masse).

L'amélioration de la stabilité thermique de polymères par incorporation de silicates lamellaires a été mise en évidence dès les années 1960 sur le PMMA. Des résultats similaires ont ensuite été observés sur d'autres polymères, tels que des polyimides ou des élastomères silicones. La température de dégradation de ces polymères est augmentée de plusieurs dizaines de degrés en présence des nanocharges.

Les silicates lamellaires modifient également de manière significative le comportement au feu des polymères. A partir des années 1990, le NIST (National Institute of Standards and Technology) a mené de nombreux travaux sur l'utilisation de montmorillonite et fluorhectorite dans différents polymères, tels que le PPgMA, le PS, le PA6, le PA12, les résines époxydes. Les teneurs utilisées restent toujours inférieures à 10% en masse. Ces travaux montrent que la présence de ces phyllosilicates entraîne une nette réduction du pic et de la valeur moyenne du flux de chaleur libérée lors de la combustion (HRR) mesurée au cône calorimètre.

Il apparaît que l'action des nanocomposites ne permet pas à elle seule d'assurer une résistance au feu efficace susceptible de franchir notamment les seuils normatifs. Beaucoup de travaux récents visent à associer les nanocomposites à d'autres systèmes retardateurs de flamme, tels que des composés phosphorés, des composés halogénés, des dérivés mélaminés et des nanotubes de carbone.

Les nanotubes de carbones ont été utilisés comme systèmes retardateurs de flamme dans différents polymères. Dans l'EVA, les résultats montrent qu'à des taux d'incorporation assez faibles (3 et 5%), les nanotubes conduisent à une réduction du pic de HRR de l'EVA mesuré au cône calorimètre, en favorisant le charbonnement du polymère. Les résultats sont meilleurs qu'avec des argiles modifiées. La combinaison des nanotubes de carbone et des argiles modifiées conduit à un effet de synergie qui serait à l'origine de la perfection de la surface du résidu formé.

La recherche d'une alternative aux produits halogénés pour l'amélioration du comportement au feu de polymères utilisés dans des mousses d'isolation peut conduire à de nombreuses solutions dont la viabilité est également liée à des éléments de coût ou d'aptitude à la transformation. Les performances les plus avantageuses sont obtenues pour des systèmes multicomposants dont la complexité des compositions se traduit par des mécanismes d'action également complexes.

L'utilisation de minéraux hydratés représente un inconvénient lié aux taux très élevés d'incorporation utilisés habituellement et qui n'est pas compatible avec le moussage d'un thermoplastique et avec une application d'isolation thermique.

Finalement, le dosage de ces produits, nécessaires à l'obtention d'une résistance au feu acceptable, affecte donc d'une manière générale les propriétés mécaniques du produit fini. En plus, vu leur concentration élevée, ces additifs ignifuges risquent de migrer vers la surface du produit. Leur distribution homogène à l'intérieur du produit n'est donc plus assurée.

### Objet de l'invention

Un objet de la présente invention est de proposer une mousse de polyoléfine ne présentant pas ou dans une moindre mesure les inconvénients cités.

L'invention a également pour objet un procédé pour fabrication de mousses ignifuges et l'utilisation des mousses ainsi obtenues.

Conformément à l'invention, cet objectif est atteint par une mousse à base d'un mélange comprenant
a. une polyoléfine choisie parmi le groupe comprenant le polyéthylène et le polypropylène, leurs copolymères et leurs mélanges,
b. de 0,05 à 10 % en poids du mélange de nanotubes de carbone, et
c. de 0,05 à 15 % en poids du mélange de phosphore rouge.

### Description générale de l'invention

Afin de résoudre le problème mentionné ci-dessus, la présente invention propose donc afin d'améliorer le comportement anti-feu de mousses polyoléfiniques d'ajouter à la polyoléfine une quantité relativement faible de nanotubes de carbone et de phosphore rouge, tel qu'indiqué à la revendication 1.

Une des possibilités d'obtenir un effet ignifuge est d'utiliser des produits capables de former une couche charbonnée ou vitrifiée isolante à la surface de la mousse.

Il a été constaté que la formation d'une telle couche peut être facilitée par l'incorporation de charges nanométriques, argiles et/ou nanotubes de carbone, qui seraient susceptibles de limiter les transferts des produits de décomposition du polymère aux premiers stades de la décomposition et induire par effet catalytique la formation d'un charbonnement. Il a en outre été observé que cet effet peut être avantageusement combiné avec celui de certains additifs phosphorés.

Par conséquent, grâce à la combinaison des agents ignifuges à base de nanotubes de carbone et de phosphore rouge, on obtient des mousses de polyoléfine ayant des caractéristiques anti-feu améliorées.

Dans le contexte de la présente invention, on entend par polyoléfine les homopolymères d'éthylène, p. ex. le LLDPE, le LDPE, le HDPE ; les copolymères de type aléatoires, séquencés, hétérophasiques ou branchés d'éthylène, p. ex. l'EVA, l'EBA, l'EMA ; les homopolymères et copolymères de type aléatoires, séquencés, hétérophasiques ou branchés de propylène, de même que les PE et PP de type métallocène. Ces polyoléfines peuvent soit s'employer individuellement ou en mélange.

Les nanotubes de carbone (NTC) ont une structure cristalline particulière, de forme tubulaire, creuse, close ou ouverte, composée d'atomes disposés régulièrement en pentagones, hexagones et/ou heptagones. Conviennent dans le cadre de l'invention en principe tous les types de nanotubes de carbone, notamment les nanotubes de carbone monofeuillet et les nanotubes de carbone multifeuillets, de diamètre compris entre 2 à 30 nm, de longueur comprises entre quelques centaines de nm à plusieurs micromètres, dont la surface peut être couverte ou non de groupements fonctionnels (alcools, amines, acides carboxyliques,...). Des exemples de NTC utilisables sont p. ex. le NANOCYL® - NC 7000 produit et fourni par la société Nanocyl, Belgique, ou encore les FIBRIL® nanotubes par Hyperion, USA.

La quantité en nanotubes de carbone se situe en général dans une gamme comprise entre 0,05 à 10 % en poids, de préférence de 0,5 à 5 % en poids du mélange.

Le phosphore rouge au sens de la présente invention désigne les diverses variétés allotropiques colorées du phosphore (phosphore rouge, violet ou noir) commercialisées sous l'appellation de phosphore rouge.

La quantité de phosphore rouge dans le mélange est généralement comprise entre 0,05 et 15 % en poids par rapport au poids total du mélange; de préférence cette quantité est comprise entre 0,5 et 10 % en poids. D'une manière générale, il est souhaitable d'utiliser le phosphore rouge sous forme finement divisée, par exemple sous forme de particules d'un diamètre moyen n'excédant pas 200 µm et de préférence compris entre 5 et 50 µm. Parmi les types de phosphore rouge utilisables dans le cadre de la présente invention, on peut citer l'EXOLIT RP 692 (CLARIANT), le Masteret 15460 B₂XF ou Masteret 10460 B₂XF de Italmatch ...

Dans une forme avantageuse de l'invention, ledit mélange peut en outre contenir jusqu'à 10 % en poids de nanoargile(s), de préférence de 0.1 à 6 % en poids et en particulier de 1 à 5 % en poids. Il est également souhaitable d'utiliser les nanoargiles sous forme finement divisée, par exemple sous forme de particules d'un diamètre moyen n'excédant pas 30 µm et de préférence compris entre 0.1 et 10 µm. Des exemples de nanoargiles appropriées sont la CLOISITE 20A (Southern Clay Products, USA), BENTONE 2106 (Elementis Specialties, Scotland), ...

Le choix de l'agent de moussage n'est pas critique. En principe, tous les agents de moussage utilisés traditionnellement pour le moussage de polyoléfines peuvent également l'être dans le cadre de la présente invention, en particulier les gaz de moussage. Avantageusement, on utilise de l'isobutane seul ou en mélange avec un autre agent de moussage.

Les mousses contiennent de préférence également des agents de stabilisation ou stabilisateurs de volume (également appelés modificateurs de la perméation), par exemple de 0 à 10 % en poids d'un ou de plusieurs stabilisateurs de volume, comme p. ex. les amides d'acides gras à chaîne saturée, notamment la stéaramide, palmitamide,... ; les esters partiels d'acides gras à chaîne saturée et de polyol, notamment l'alpha monostéarate de glycérol, etc.

Les mousses obtenues comportent de préférence essentiellement des cellules fermées et ont d'une manière générale une densité inférieure à 500 kg/m³, de préférence inférieure à 250 kg/m³ et en particulier de 20 à 100 kg/m³.

D'autres additifs pouvant être communément employés sont notamment des additifs antistatiques, des agents anti-UV, des antioxydants, des pigments, des agents pour contrôler et/ou régulariser la structure cellulaire pour améliorer la qualité de la mousse: nucléants pour rendre les cellules plus fines (p.ex. du talc, du carbonate de calcium, de la silice finement précipitée,...) ou dénucléants pour augmenter la taille des cellules (cires de polyéthylène oxydée, cires de candelilla,...) et/ou des agents absorbant, réfléchissant ou diffractant les rayons infrarouges pour une amélioration de l'isolation thermique (p.ex. des particules de métaux ou d'oxyde métalliques, de mica, de dioxyde de titane, de graphite, de noirs de carbone, de kaolin, ... ).

Une utilisation particulièrement intéressante de ces mousses de polyoléfine ignifuge est l'usage en tant que matériau isolant, protecteur, amortisseur, et/ou décoratif, sous forme de panneaux ou de plaques, de tubes ou de gaines, de profilés, etc., seules ou comme partie d'un matériau composite.

L'invention concerne également un procédé de fabrication d'une mousse de polyoléfine ignifuge dans lequel une polyoléfine choisie parmi le groupe comprenant le polyéthylène et le polypropylène, leurs copolymères et leurs mélanges, est mélangée à 0,05 à 10 %, de préférence de 0,5 à 5 % en poids de nanotubes de carbone et de 0,05 à 15 %, de préférence de 0,5 à 10 % en poids de phosphore rouge, et éventuellement jusqu'à 10 % en poids de nanoargile, par rapport au poids total du mélange, et en ce qu'on extrude le mélange ainsi obtenu en présence d'un agent de moussage afin d'obtenir une mousse.

En particulier, l'invention concerne un procédé de fabrication de mousse par extrusion, de préférence avec injection directe de gaz. Un tel procédé comprend les étapes suivantes:
a. dosage des polymères et additifs, prémélangés ou dosés individuellement, à l'alimentation d'une extrudeuse, p. ex. à simple vis, double vis co-rotative ou contre-rotative ;
b. plastification du mélange polymères et d'additifs par chauffage à haute température du cylindre et mélangeage par la vis pour fondre entièrement la masse et l'homogénéiser ;
c. injection dans le cylindre d'un gaz de moussage, de préférence à l'endroit où la viscosité du mélange polymères et d'additifs est la plus appropriée ;
d. homogénéisation de la masse de polymères, d'additifs et de gaz de moussage ;
e. de préférence, refroidissement de la masse dans les dernières zones plus froides du cylindre, section de refroidissement statique, homogénéisation;
f. extrusion à travers une filière, contrôlée en température, ayant une section de forme prédéfinie selon l'application finale de la mousse, la masse subissant une chute importante de pression qui entraîne la formation des bulles de gaz, provoquant la formation de la mousse à l'air libre.
g. le cas échéant, refroidissement, étirage et guidage de la mousse.

Les températures à utiliser dans le procédé dépendent évidemment de plusieurs facteurs, dont la nature des ingrédients utilisés, le type d'appareillage et le mode de fonctionnement choisis, etc. L'homme de métier dans ce domaine de part son expérience n'aura pas de problèmes à choisir les gammes de température appropriés en fonction des conditions opératoires déterminées. A titre purement d'illustration, dans le cas d'un LDPE, la température du cylindre à l'étape b. est choisie de préférence de telle manière que la température dans la masse se situe entre 130 et 180 °C ; la température à l'étape e. sera alors par exemple de 100 à 140 °C, en fonction de la température choisie à l'étape b. La température d'extrusion à l'étape f. est importante pour la formation et la stabilité de la mousse produite et sera dans un tel cas contrôlée de manière à avoir une température plus basse, par exemple de 90 à 120 °C, en fonction de nouveau de la température à l'étape e.

De préférence, les nanotubes de carbone et éventuellement le phosphore rouge, le cas échéant aussi les nanoargiles peuvent être prémélangés, individuellement ou ensemble, à une partie de la polyoléfine avant l'étape a. ci-dessus afin d'améliorer ou d'accélérer leur mélange à l'étape a. Un tel prémélange peut également concerner une partie ou la totalité des autres additifs envisagés.

La mousse extrudée peut être guidée, par une étireuse pratiquement sans tension, dans une section de refroidissement (air ou eau ou les deux) pour figer la structure désirée.

Les équipements utilisés pour la fabrication de mousses de polyoléfines ordinaires peuvent être utilisés dans la fabrication de mousses de polyoléfines ignifuges.

### Exemples

Les tableaux ci-dessous résument les tests feu du type épiradiateur (AFNOR NF P92-505) effectués sur des plaques compactes et sur des mousses. Les résultats présentent le temps nécessaire à l'inflammation d'une plaque de 3x7x7cm³ (TTI), et le nombre de fois que l'échantillon s'est éteint durant les 5 minutes du test (N). Le TTI et le N doivent être grands pour un bon comportement au feu.

### Produits et réactifs :

Les produits et réactifs suivants ont été utilisés pour les tests :
**APP :** ammonium polyphosphate de CLARIANT: EXOLIT AP 422
**Red P :** phosphore rouge de CLARIANT: masterbatch EXOLIT RP 692 concentré à 50% de phosphore rouge dans du polyéthylène basse densité
**OP 1230 :** phosphinate de CLARIANT: EXOLIT OP 1230
**NTC :** nanotubes de carbone, de NANOCYL - NC 7000
**CLOISITE 20A :** nanoargile organomodifiée de Southern Clay Products
**OSV 90** = concentré à 90% d'amides d'acide gras ARMID HT (AKZO NOBEL) dans 10% d'EVA
**LDPE:** polyéthylène basse densité de SABIC: 1922T (densité 919 kg/m³, MFI= 22)

### Exemple 1 : Plaques compactes:

Les essais comparatifs et suivant l'invention repris ci-après ont été effectués sur des plaques compactes en LDPE contenant les agents ignifuges indiqués aux quantités reprises dans le Tableau 1 ci-dessous.

**Tableau 1**

| | | TTI (s) | N |
|---|---|---|---|
| 1 (Comp.) | **LDPE** | 67 | 1 |
| 2 (Comp.) | Plaque faite à partir d'une mousse **LDPE +** ignifuge halogéné (Bromé + Sb₂O₃) | 89,5 | 8 |
| 3 (Comp.) | 10% **APP** | 48 | 2,5 |
| 4 (Comp.) | 20% **APP** | 47 | 4 |
| 5(Comp.) | 10% **NTC** | 61,5 | 5 |
| 6 (Comp.) | 3% **NTC** | 105 | 1 |
| 7 (Comp.) | 10% **Red P** | 102 | 13,5 |
| 8 (Comp.) | 10% **CLOISITE 20A** | 52 | 1 |
| 9 (Comp.) | 3% **CLOISITE 20A** | 72 | 1 |
| 10 (Comp.) | 10% **OP 1230** | 63 | 14 |
| 11 (Comp.) | 20% **OP 1230** | 101 | 2 |
| 12 (Comp.) | 7% **APP** + 3% **NTC** | 44,5 | 2,5 |
| 13 (Comp.) | 7% **APP** + 3% **CLOISITE 20A** | 44,5 | 2 |
| 14 | 7% **OP 1230** + 3% **NTC** | 56 | 13,5 |
| 15 (Comp.) | 7% **OP 1230** + 3% **CLOISITE 20A** | 54,5 | 1 |
| 16 | 7% **Red P** + 3% **NTC** | 58 | 21 |
| 17 (Comp.) | 7% **Red P** + 3% **CLOISITE 20A** | 60,5 | 1 |

### Exemple 2 : Mousses ignifuges

Les mousses suivantes ont été extrudées selon le procédé décrit précédemment ; elles comportent un stabilisateur de volume (amides d'acide gras : stéaramide + palmitamide) nécessaire pour éviter un collapse, lorsque les mousses sont gonflées à l'isobutane.

**Tableau 2 : Compositions de mousses**

| **Composition n°** | | **M72 (comp.)** | | **M73** | | **M74** | |
|---|---|---|---|---|---|---|---|
| Produits | | parts | % en poids | parts | % en poids | parts | % en poids |
| LDPE 2102TX00 (SABIC, LDPE densité 921 kg/m³ - MFI(190°C/2.16kg) =2 | | 85 | 81,7% | 71 | 68,9% | | 0,0% |
| PLASTICYL (Masterbatch 80% LDPE + 20% nanotubes) | | 15 | 14,4% | 15 | 14,6% | 15 | 14,6% |
| Masterbatch 85,5/11,6/2,9 % LDPE/EVA /CLOISITE 20A | | | 0,0% | | 0,0% | 71 | 68,9% |
| EXOLIT RP 692 (MB 50% LDPE + 50% red P) | | | 0,0% | 14 | 13,6% | 14 | 13,6% |
| MB Talc (50% LDPE + 50% talc) | | 1 | 1,0% | | 0,0% | | 0,0% |
| OSV 90 | | 3 | 2,9% | 3 | 2,9% | 3 | 2,9% |
| | | 104 | 100,0% | 103 | 100,0% | 103 | 100,0% |
| | | | | | | | |

| Masterbatch (MB) | % conc. du MB | | % de la composit. | | % de la composit. | | % de la composit. |
|---|---|---|---|---|---|---|---|
| % NTC | 20% | | 2,9% | | 2,9% | | 2,9% |
| % CLOISITE 20A | 3% | | 0,0% | | 0,0% | | 2,0% |
| % Red P | 50% | | 0,0% | | 6,8% | | 6,8% |

**Tableau 3 : Résultats des essais de combustion à l'épiradiateur:**

| | TTI (s) | N |
|---|---|---|
| Mousse de réf. halogénée 25 kg/m³ | 22 | 3,5 |
| M72 (PEBD/NTC ) (comp.) | 5,5 | 1 |
| M73 (PEBD/NTC/Red P) | 10 | 5,5 |
| M74 (PEBD/NTC/Red P/Cloisite) | 10 | 6 |

Les deux dernières compositions indiquent une progression par rapport à la mousse de référence. Une amélioration de leur structure cellulaire et une réduction de la densité des mousses peuvent être obtenues en veillant à une dispersion suffisante des nanotubes NTC, de préférence en les dosant via un masterbatch (MB) p.ex. dans la polyoléfine choisie et en évitant une concentration trop élevée de NTC dans le MB qui provoque une augmentation trop forte de la viscosité de celui-ci.

En effet, lorsqu'on réextrude une première fois le masterbatch (MB) de NTC en un compound, puis en faisant la mousse à partir de ce compound (c'est-à-dire deux extrusions en tout), quelques trous sont encore présents, mais ils sont nettement plus petits, il n'y a pas de grains solides détectables et la densité de la mousse atteint 27 kg/m³.

Par conséquent, en combinant les nanotubes de carbone et le phosphore rouge, éventuellement même des nanoargiles, comme agents ignifuges, on obtient de très bons résultats, surtout en ce qui concerne le caractère autoextincteur de mousses selon l'invention.

Le test feu suivant (mass loss calorimeter, ASTM E2102-04a), fait sur ces mousses, mesure la quantité de chaleur totale (THRR) dégagée lors de la combustion et le maximum de dégagement de chaleur (HRR):

**Tableau 4 : Résultats des essais de combustion au cône calorimètre**

| Catégorie/version de | HRR max | THRR | Masse | HRR max/g | THRR/g |
|---|---|---|---|---|---|
| Mousse | (kW/m²) | (MJ/m²) | (g) | (kW/g.m²) | (MJ/g.m²) |
| Mousse LDPE sans | 199 | 10,94 | 3,6 | 3 | 55,27 |
| antifeu | | | | | |
| Mousse LDPE | 189 | 15,16 | 3,11 | 4,87 | 60,77 |
| Halogénée de réf. (voir | | | | | |
| Tableau 1 ex. 2 | | | | | |
| (comp) | | | | | |
| NTC (M72) | 301 | 24,94 | 6,02 | 4,14 | 50 |
| NTC - Red P (M73) | 288 | 21,6 | 6,75 | 3 | 42 |
| NTC - Red P - Cloisite | 247 | 18,6 | 6,39 | 2,9 | 38,65 |
| (M74) | | | | | |

Rapporté au poids de mousse, les compositions M72, mais surtout M73 et M74 sont meilleures que la mousse de référence halogénée.

## Revendications

1. Mousse de polyoléfine ignifuge à base d'un mélange comprenant
a. une polyoléfine choisie parmi le groupe comprenant le polyéthylène et le polypropylène, leurs copolymères et leurs mélanges,
b. de 0,05 à 10 %, de préférence de 0,5 à 5 % en poids de nanotubes de carbone, et
c. de 0,05 à 15 %, de préférence de 0,5 à 10 % en poids de phosphore rouge,
par rapport au poids total du mélange.

2. Mousse de polyoléfine ignifuge selon la revendication 1, comprenant en outre jusqu'à 10 % en poids de nanoargile(s), de préférence de 0,1 à 6 % en poids et en particulier de 1 à 5 % en poids.

3. Mousse selon la revendication 1 ou 2, ayant une densité inférieure à 500 kg/m³, de préférence inférieure à 250 kg/m³ et en particulier de 20 à 100 kg/m³.

4. Mousse selon l'une quelconque des revendications précédentes, **caractérisée en ce qu'**elle comprend en outre de 0 à 10 % en poids d'un ou de plusieurs stabilisateurs de volume.

5. Mousse selon l'une quelconque des revendications précédentes, **caractérisée en ce qu'**elle comprend en outre des additifs antistatiques, des agents anti-UV, des antioxydants, des pigments ou des agents de nucléation.

6. Mousse selon l'une quelconque des revendications précédentes, **caractérisée en ce qu'**elle comporte essentiellement des cellules fermées.

7. Utilisation de la mousse selon l'une quelconque des revendications précédentes comme matériau isolant, protecteur, amortisseur et/ou décoratif pour la fabrication de panneaux, de tubes, de profilés, etc.

8. Procédé de fabrication d'une mousse de polyoléfine ignifuge, **caractérisé en ce qu'**une polyoléfine choisie parmi le groupe comprenant le polyéthylène et le polypropylène, leurs copolymères et leurs mélanges, est mélangée à 0,05 à 10 %, de préférence de 0,5 à 5 % en poids de nanotubes de carbone et de 0,05 à 15 %, de préférence de 0,5 à 10 % en poids de phosphore rouge, et éventuellement jusqu'à 10 % en poids de nanoargile(s), par rapport au poids total du mélange, et **en ce qu'**on extrude le mélange ainsi obtenu en présence d'un agent de moussage afin d'obtenir une mousse.

9. Procédé de fabrication de mousse selon la revendication 8, comprenant les étapes suivantes:
a. dosage de la polyoléfine et des additifs, prémélangés ou dosés individuellement, à l'alimentation d'une extrudeuse ;
b. plastification du mélange de polyoléfine et d'additifs par chauffage à haute température du cylindre et mélangeage pour fondre entièrement la masse et l'homogénéiser ;
c. injection dans l'extrudeuse d'un gaz de moussage ;
d. homogénéisation du mélange de polyoléfine, d'additifs et de gaz ;
e. refroidissement partiel du mélange et homogénéisation ;
f. extrusion à travers une filière, contrôlée en température, le mélange subissant une chute importante de pression qui entraîne la formation des bulles de gaz, provoquant la formation de la mousse à l'air libre.
g. le cas échéant, refroidissement, étirage et guidage de la mousse.
